# EUROPEAN PATENT SPECIFICATION

(11) **EP 3 690 258 B1**
(45) Date of publication and mention of the grant of the patent: **12.01.2022**
(21) Application number: 18873896.7
(22) Date of filing: 06.09.2018
(51) Int. Cl.: F15B 11/044, F15B 11/10, F15B 11/048, F15B 11/04, B30B 15/00, B23Q 3/00, B29C 45/00, F15B 11/17, B30B 15/16

(54) **HYDRAULIC DEVICE**
HYDRAULIKVORRICHTUNG
DISPOSITIF HYDRAULIQUE

(30) Priority: 02.11.2017 JP 2017213093
(43) Date of publication of application: 05.08.2020
(73) Proprietor: Daikin Industries, Ltd., Osaka-shi, Osaka 530-8323 (JP)
(72) Inventor: KANBAYASHI, Atsuhiro, Osaka-shi Osaka 530-8323 (JP)
(74) Representative: Hoffmann Eitle
(86) International application number: PCT/JP2018/032992
(87) International publication number: WO 2019/087565

(56) References cited:
- EP-A2- 2 602 492
- WO-A1-2010/020427
- JP-A- H10 166 199
- JP-A- 2001 214 903

## Description

### TECHNICAL FIELD

The present invention relates to hydraulic devices.

### BACKGROUND ART

Conventionally, as a hydraulic device, there is a hydraulic device that controls a hydraulic cylinder by using a servo valve (for example, see JP 2011-11521 A).

An accumulator-free hydraulic drive system and a method for hydraulically driving a consumer without an accumulator is known from WO 2010 020427 A1. The drive system comprises a consumer having two pressure compartments which act in opposite directions, one of which can be supplied with a pressure medium via a first pressure conduit and a pump arrangement and the other via a second pressure conduit and the pump arrangement.

A device capable of simultaneously attaining high efficiency and high control performance in the hydraulic drive unit using a hydraulic cylinder is known from JP 2001 214903 A. A separate oil hydraulic pump is connected
respectively to an extending/contacting side oil chamber of a hydraulic cylinder, these pumps are driven by a separate electric servomotor. In a control means, a command relating to the electric servomotor is respectively calculated, based on displacement and its target value of the hydraulic cylinder detected by a displacement detector.

EP 2 602 492 A2 discloses an electrohydraulic control device and a method for the control of such an electrohydraulic control device, wherein the speed control is based on a quantity-adjustable pressure medium source and the position control is based on a digital hydraulics.

### SUMMARY OF INVENTION

### TECHNICAL PROBLEMS

In such a hydraulic device that controls a hydraulic cylinder by using a servo valve, in a case where a configuration is adopted in which rods are provided on both sides of a piston of the hydraulic cylinder, the hydraulic cylinder can be preferably controlled when the hydraulic device is configured such that the flow rate ratio between meter-in and meter-out is 1:1.

However, in the above hydraulic device using the servo valve, there are throttles on both the meter-in side and the meter-out side of the servo valve, and the hydraulic pump that supplies hydraulic oil to the hydraulic cylinder is constantly rotated to generate hydraulic pressure, and therefore the amount of excess oil becomes great. As a result, there are a problem that energy consumption is great, and a problem that the hydraulic cylinder cannot be driven at high speed because the flow rate is limited by the throttles of the servo valve and the flow rate required to drive the hydraulic cylinder at high speed cannot be obtained.

In addition, in the above hydraulic device using the servo valve, if the throttle of the servo valve is wide open to enable high-speed driving of the hydraulic cylinder, there is a problem that the position of the hydraulic cylinder cannot be controlled highly accurately.

Further, in the above hydraulic device using the servo valve, in a case where a rod is provided on one side of the piston of the hydraulic cylinder, in rotation control of the motor that drives a hydraulic pump, since there is a difference in area between both end surfaces of the piston of the hydraulic cylinder. Thus, it is difficult to preferably control the hydraulic cylinder and it is necessary to individually design the servo valve according to the difference in area between both end surfaces of the piston of the hydraulic cylinder.

Furthermore, in the above hydraulic device using the servo valve, in a case where back pressure is controlled by external force, it is necessary to block the meter-in side by configuring a back-pressure control circuit separately from the servo valve, or by adding a control valve. Therefore, there is a problem that the circuit configuration becomes complicated.

An object of the present invention is to provide a hydraulic device enabling energy saving, high-speed driving, high-precision position control, and back pressure control with a simple configuration without using a servo valve.

### SOLUTION TO PROBLEMS

A hydraulic device according to an aspect of the present invention includes:
- a hydraulic pump;
- a motor that drives the hydraulic pump;
- a hydraulic cylinder that includes an inflow-side port to which hydraulic oil is supplied from the hydraulic pump driven by the motor;
- a position sensor that detects the position of a rod of the hydraulic cylinder;
- a controller that controls the flow rate of hydraulic oil supplied from the hydraulic pump to the inflow-side port of the hydraulic cylinder by controlling the motor on the basis of output from the position sensor; and
- a pressure control circuit that controls pressure at an outflow-side port provided in the hydraulic cylinder on the basis of output of the position sensor wherein the pressure control circuit includes a pressure control valve controlled by the controller (50), wherein the pressure control valve (30) is configured to control the pressure of hydraulic oil supplied from an external hydraulic source on the basis of output of the position sensor, and controls the pressure at the outflow-side port of the hydraulic cylinder by using the pressure of the hydraulic oil controlled by the pressure control valve.

According to the above configuration, the controller controls the rotational speed of the motor on the basis of output of the position sensor that detects the hydraulic pump driven by the motor to the inflow-side port of the hydraulic cylinder. Thus, acceleration control is performed to the hydraulic cylinder. In addition, on the basis of output of the position sensor, the pressure control circuit controls the pressure at the outflow-side port of the hydraulic cylinder. Thus, braking control is performed to the hydraulic cylinder. In this manner, a two-degree-of-freedom control system that freely controls acceleration on the inflow side and braking on the outflow side of the hydraulic cylinder is achieved.

Thus, energy saving, high-speed driving, high-precision position control, and back pressure control are enabled with a simple configuration without using a servo valve.

The pressure of the hydraulic oil supplied from an external hydraulic source is controlled by the pressure control valve of the pressure control circuit on the basis of output of the position sensor. By using the pressure of the hydraulic oil controlled by the pressure control valve, the pressure control circuit controls the pressure at the outflow-side port of the hydraulic cylinder on the basis of output of the position sensor. Thus, the pressure control circuit can preferably perform braking control on the outflow side of the hydraulic cylinder.

Not according to the invention, the pressure control circuit may include
a second hydraulic pump whose discharge port is connected to the outflow-side port of the hydraulic cylinder, and
a second motor that drives the second hydraulic pump, and
the hydraulic device further includes a second controller that controls the pressure at the outflow-side port of the hydraulic cylinder by controlling the second motor on the basis of output of the position sensor.

The second controller controls the rotational speed of the second motor of the pressure control circuit on the basis of output of the position sensor to control the pressure at the outflow-side port of the hydraulic cylinder. Thus, braking controllability on the outflow-side of the hydraulic cylinder can be improved.

Not according to the invention, the pressure control circuit may include
a check valve that is disposed between the discharge port of the second hydraulic pump and the outflow-side port of the hydraulic cylinder, and allows only the flow of hydraulic oil from the second hydraulic pump to the hydraulic cylinder, and
a pressure control valve that is disposed between a hydraulic cylinder-side port of the check valve and a tank and controls the pressure at the outflow-side port of the hydraulic cylinder on the basis of pressure from the second hydraulic pump controlled by the second controller.

The check valve of the pressure control circuit is disposed between the discharge port of the second hydraulic pump and the outflow-side port of the hydraulic cylinder, and allows only the flow of hydraulic oil from the second hydraulic pump to the hydraulic cylinder. Then, the second controller of the pressure control circuit controls the rotational speed of the second motor of the pressure control circuit on the basis of output of the position sensor. Also, on the basis of the pressure of the hydraulic oil discharged from the second hydraulic pump, the pressure control valve disposed between the hydraulic cylinder-side port of the check valve and the tank controls pressure at the outflow-side port of the hydraulic cylinder. As a result, the capacity of the second hydraulic pump can be made smaller than that in a case where the second hydraulic pump directly controls pressure at the outflow-side port of the hydraulic cylinder.

### ADVANTAGEOUS EFFECTS OF INVENTION

As is apparent from the above, according to the present invention, on the basis of output of the position sensor that detects the position of the rod of the hydraulic cylinder, the flow rate of the hydraulic oil supplied from the hydraulic pump to the inflow-side port of the hydraulic cylinder is controlled to control acceleration of the hydraulic cylinder and the pressure control circuit controls the pressure at the outflow-side port of the hydraulic cylinder to control braking of the hydraulic cylinder. Thus, a hydraulic device enabling high-speed driving, high-precision position control, and back pressure control can be realized with a simple configuration without using a servo valve.

### BRIEF DESCRIPTION OF DRAWINGS

- FIG. 1 is a schematic block diagram of a hydraulic device according to a first embodiment of the present invention.
- FIG. 2 is a schematic block diagram of a hydraulic device which is not covered by the claim.
- FIG. 3 is a schematic block diagram of a hydraulic device which is not covered by the claim.

### DESCRIPTION OF EMBODIMENTS

Hereinafter, hydraulic devices according to the present invention will be described in detail with reference to the illustrated first embodiment.

### [First embodiment]

### [First embodiment]

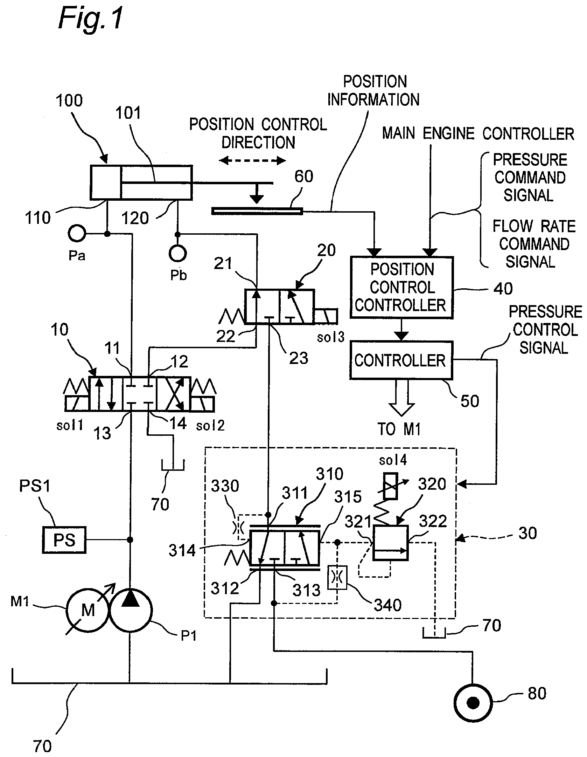

FIG. 1 is a schematic block diagram of a hydraulic device according to a first embodiment of the present invention. This hydraulic device is used for an industrial machine (main engine) such as an injection molding machine, a press machine, and a machine tool.

As illustrated in FIG. 1, the hydraulic device according to the first embodiment includes a hydraulic pump P1 that sucks and discharges hydraulic oil, a motor M1 that drives the hydraulic pump P1, a hydraulic cylinder 100 to which hydraulic oil is supplied from the hydraulic pump P, a pressure sensor PS1 that detects discharge pressure of the hydraulic pump P1, a first directional control valve 10 (4 ports, 3 positions), a second directional control valve 20 (3 ports, 2 positions), an electromagnetic proportional pressure control valve 30, a position control controller 40, a controller 50 that controls the motor M1, a position sensor 60 that detects the current position of a rod 101 of the hydraulic cylinder 100, and a tank 70 that stores hydraulic oil. The hydraulic cylinder 100 is a single-rod hydraulic cylinder, and has a head-side port 110 and a rod-side port 120.

The electromagnetic proportional pressure control valve 30 is an example of a pressure control circuit.

A discharge port of the hydraulic pump P1 is connected to a pump port 13 of the first directional control valve 10. A tank port 14 of the first directional control valve 10 is connected to the tank 70. A load port 11 of the first directional control valve 10 is connected to a head-side port 110 of the hydraulic cylinder 100. A second port 22 of the second directional control valve 20 is connected to a load port 12 of the first directional control valve 10.

In a case where both solenoids sol1 and sol2 of the first directional control valve 10 are not energized, the first directional control valve 10 is in the center switching position, and the load ports 11, 12, the pump port 13, and the tank port 14 are closed. In contrast, in a case where the solenoid sol1 of the first directional control valve 10 is energized, the first directional control valve 10 is in the left switching position, the load port 11 and the pump port 13 communicate with each other, and the load port 12 and the tank port 14 communicate with each other. In contrast, in a case where the solenoid sol2 of the first directional control valve 10 is energized, the first directional control valve 10 is in the right switching position, the load port 11 and the tank port 14 communicate with each other, and the load port 12 and the pump port 13 communicate with each other.

A first port 21 of the second directional control valve 20 is connected to a rod-side port 120 of the hydraulic cylinder 100. A third port 23 of the second directional control valve 20 is connected to the electromagnetic proportional pressure control valve 30.

In a case where the solenoid sol3 of the second directional control valve 20 is not energized, the second directional control valve 20 is in the left switching position, the first port 21 and the second port 22 communicate with each other, and the third port 23 is closed. In contrast, in a case where the solenoid sol3 of the second directional control valve 20 is not energized, the second directional control valve 20 is in the right switching position, the first port 21 and the third port 23 communicate with each other, and the second port 22 is closed.

The electromagnetic proportional pressure control valve 30 includes a proportional pressure reducing valve 310 (3 ports, 2 positions), and an electromagnetic proportional relief valve 320.

The third port 23 of the second directional control valve 20 is connected to a first port 311 of the proportional pressure reducing valve 310. The tank 70 is connected to a tank port 312 of the proportional pressure reducing valve 310. An external hydraulic source 80 is connected to a second port 313 of the proportional pressure reducing valve 310.

The first port 311 and a first pilot port 314 of the proportional pressure reducing valve 310 are connected to each other via a throttle 330. The second port 313 and a second pilot port 315 of the proportional pressure reducing valve 310 are connected to each other via a throttle 340.

The second pilot port 315 of the proportional pressure reducing valve 310 is connected to a port 321 of the electromagnetic proportional relief valve 320. The tank 70 is connected to a tank port 322 of the electromagnetic proportional relief valve 320. In the electromagnetic proportional relief valve 320, a solenoid sol4 is energized by a pressure control signal from the controller 50. This pressure control signal is output from the controller 50 on the basis of output of the position sensor 60.

Note that in this embodiment, a pressure control signal is output from the controller 50; however, a pressure control signal may be output from the position control controller 40.

In the electromagnetic proportional pressure control valve 30, the pressure at the second pilot port 315 of the proportional pressure reducing valve 310 increases or decreases depending on the magnitude of the energizing current of the solenoid sol4 of the electromagnetic proportional relief valve 320, and the pressure at the first port 311 of the proportional pressure reducing valve 310 increases due to pressure of hydraulic oil supplied from the external hydraulic source 80, as the energizing current of the electromagnetic proportional relief valve 320 increases.

The position control controller 40 controls the first directional control valve 10, the second directional control valve 20, the electromagnetic proportional pressure control valve 30, and the like, on the basis of operation information (including a target position), a flow rate command signal and a pressure command signal from a main engine controller (not illustrated), and output (current position) of the position sensor 60.

The controller 50 controls the motor M1 on the basis of a flow rate command signal and a pressure command signal from the position control controller 40, and output of the pressure sensor PS1.

In the hydraulic device having the above configuration, in a state where the piston 102 of the hydraulic cylinder 100 is located closest to the head-side port 110, the position control controller 40 energizes the solenoid sol1 of the first directional control valve 10 to switch the first directional control valve 10 to the left switching position, the solenoid sol3 of the second directional control valve 20 is not energized, and the second directional control valve 20 is switched to the left switching position.

As a result, the head-side port 110 (inflow-side port) of the hydraulic cylinder 100 is connected to the discharge port of the hydraulic pump P1 via the first directional control valve 10. The rod-side port 120 (outflow-side port) of the hydraulic cylinder 100 is connected to the tank 70 via the second directional control valve 20.

On the basis of the flow rate command signal and the pressure command signal from the position control controller 40 and output of the pressure sensor PS1, the controller 50 controls the rotational speed of the motor M1 to move the piston 102 of the hydraulic cylinder 100 rightward at high speed and then moves the piston 102 at low speed.

During this low-speed movement, the solenoid sol3 of the second directional control valve 20 is energized to switch the second directional control valve 20 to the left switching position. As a result, the rod-side port 120 (outflow-side port) of the hydraulic cylinder 100 is connected to the electromagnetic proportional pressure control valve 30.

Then, on the basis of output of the position sensor 60, the controller 50 controls the electromagnetic proportional pressure control valve 30 while controlling the rotational speed of the motor M1, and moves the rod 101 of the hydraulic cylinder 100 to the target position.

At this time, acceleration of the hydraulic cylinder 100 is controlled by controlling the rotational speed of the motor M1 to control the flow rate of hydraulic oil supplied from the hydraulic pump P1 to the head-side port 110 of the hydraulic cylinder 100. In addition, on the basis of output of the position sensor 60, the electromagnetic proportional pressure control valve 30 controls the pressure at the rod-side port 120 of the hydraulic cylinder 100 to control braking of the hydraulic cylinder 100.

Next, in the case of returning the rod 101 of the hydraulic cylinder 100 to the original position, the position control controller 40 does not energize the solenoid soll of the first directional control valve 10 and energizes the solenoid sol2, switches the first directional control valve 10 to the right switching position, and turns off energization of the solenoid sol3 of the second directional control valve 20 to switch the second directional control valve 20 to the left switching position.

As a result, the head-side port 110 (outflow-side port) of the hydraulic cylinder 100 is connected to the tank 70 via the first directional control valve 10. In addition, the rod-side port 120 (inflow-side port) of the hydraulic cylinder 100 is connected to the discharge port of the hydraulic pump P1 via the second directional control valve 20.

Then, on the basis of the flow rate command signal and the pressure command signal from the position control controller 40 and output of the pressure sensor PS1, the controller 50 controls the rotational speed of the motor M1 to move the piston 102 of the hydraulic cylinder 100 leftward at high speed and moves the piston 102 at low speed to return the rod 101 to the original position.

In this way, in the above hydraulic device, for example, in a press machine, the hydraulic cylinder 100 moves a mold at high speed and the speed is switched to low speed just before the target position. Thus, it is possible to suppress shock at the time of stopping and to accurately stop the mold at the target position.

In the hydraulic device according to the above configuration, the controller 50 controls the rotational speed of the motor M1 on the basis of output of the position sensor 60 that detects the position of the rod 101 of the hydraulic cylinder 100 to control the flow rate of the hydraulic oil supplied from the hydraulic pump P1 driven by the motor M1 to the inflow-side port of the hydraulic cylinder 100. Thus, acceleration of the hydraulic cylinder 100 is controlled. In addition, on the basis of output of the position sensor 60, the controller 50 and the electromagnetic proportional pressure control valve 30 control pressure at the outflow-side port of the hydraulic cylinder 100 to control braking of the hydraulic cylinder 100. In this manner, a two-degree-of-freedom control system can be configured to freely control acceleration on the inflow side and braking on the outflow side of the hydraulic cylinder 100.

The hydraulic device described above is excellent in energy saving because there is no throttle that controls the flow rate of hydraulic oil and excess oil can be reduced, as compared with a conventional hydraulic device in which a hydraulic pump is constantly driven by using a servo valve.

Further, since the flow rate is not limited unlike a servo valve and the hydraulic pump P1 can supply hydraulic oil to the hydraulic cylinder at a flow rate required for high-speed driving, the hydraulic cylinder can be driven at high speed.

In addition, since acceleration on the inflow side and braking on the outflow side of the hydraulic cylinder 100 are independently controlled freely, controllability is improved and highly accurate position control becomes possible.

Furthermore, the controller 50 and the electromagnetic proportional pressure control valve 30 control pressure at the outflow-side port of the hydraulic cylinder 100 on the basis of output of the position sensor 60 to control braking of the hydraulic cylinder 100. Therefore, back pressure can be controlled without forming a back-pressure control circuit separately or blocking the meter-in side by adding a control valve.

In the conventional hydraulic device in which the hydraulic pump is constantly driven by using the servo valve, an accumulator, that temporarily stores excess oil between the hydraulic pump and the servo valve, and a high-pressure in-line filter are required. However, in the hydraulic device according to the first embodiment, since rotation of the hydraulic pump is controlled instead of flow rate control by the throttle, an accumulator and a high-pressure in-line filter are not required.

Therefore, according to the hydraulic device of the first embodiment, energy saving can be realized with a simple configuration without using a servo valve. In addition, the hydraulic cylinder 100 can be driven at high-speed, can be positioned highly accurately, and back pressure of the hydraulic cylinder 100 can be controlled.

The controller 50 and the electromagnetic proportional pressure control valve 30 control the pressure of the hydraulic oil supplied from the external hydraulic source 80 on the basis of output of the position sensor 60. By controlling the pressure at the outflow-side port of the hydraulic cylinder 100 on the basis of output of the position sensor 60 by using the pressure of the hydraulic oil controlled by the electromagnetic proportional pressure control valve 30, braking on the outflow side of the hydraulic cylinder 100 can be preferably controlled.

In the hydraulic device of the above first embodiment, a servo valve, a servomotor, an accumulator, and a high-pressure in-line filter are not used. Therefore, the structure can be simplified and costs can be reduced.

Further, in a case where the above hydraulic device is used in a press machine, pressure can be stably controlled in die cushion control. Here, the die cushion is a device having a function of generating a force for pushing up a pressed molded product from below or a pressure holding function of generating reaction force for a blank holder for drawing, in a press machine.

Note that in the above first embodiment, a hydraulic unit including the hydraulic pump P1, the motor M1, the pressure sensor PS1, the controller 50, and the like may be used.

### [Second embodiment]

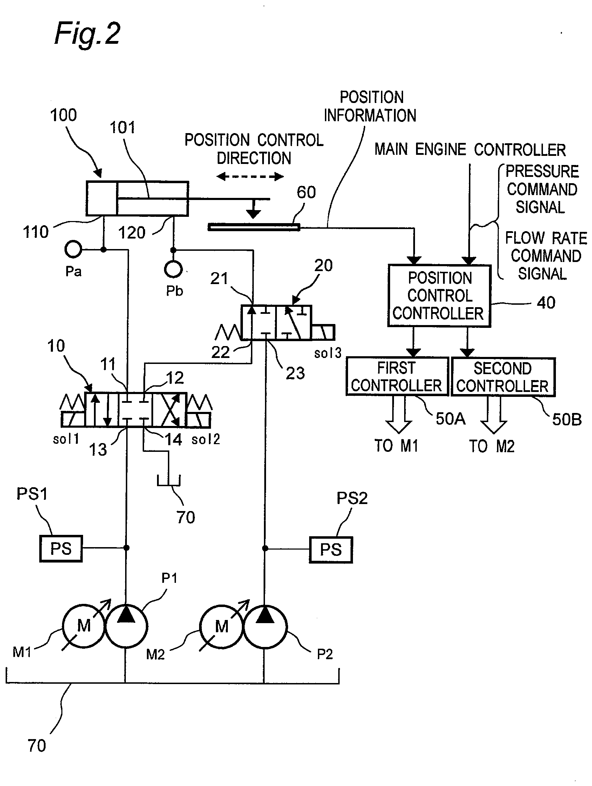

FIG. 2 is a schematic block diagram of a hydraulic device according to a second embodiment which is not covered by the claim. This hydraulic device is used for an industrial machine (main engine) such as an injection molding machine, a press machine, and a machine tool.

As illustrated in FIG. 2 , the hydraulic device according to the second embodiment includes first and second hydraulic pumps P1, P2 that suck and discharge hydraulic oil, a first motor M1 that drives the first hydraulic pump P1, a second motor M2 that drives the second hydraulic pump P2, a hydraulic cylinder 100 to which hydraulic oil is supplied from the hydraulic pump P1, a pressure sensor PS1 that detects discharge pressure of the first hydraulic pump P1, a pressure sensor PS1 that detects discharge pressure of the first hydraulic pump P1, a pressure sensor PS2 that detects discharge pressure of the second hydraulic pump P2, a first directional control valve 10 (4 ports, 3 positions), a second directional control valve 20 (3 ports, 2 positions), a position control controller 40, a first controller 50A that controls the motor M1, a second controller 50B that controls the second motor M2, a position sensor 60 that detects the position of the rod 101 of the hydraulic cylinder 100, and a tank 70 that stores hydraulic oil. The hydraulic cylinder 100 is a single-rod hydraulic cylinder, and has a head-side port 110 and a rod-side port 120.

The second hydraulic pump P2 and the second motor M2 constitute a pressure control circuit.

A discharge port of the first hydraulic pump P1 is connected to a pump port 13 of the first directional control valve 10. A tank port 14 of the first directional control valve 10 is connected to the tank 70. A load port 11 of the first directional control valve 10 is connected to a head-side port 110 of the hydraulic cylinder 100. A second port 22 of the second directional control valve 20 is connected to a load port 12 of the first directional control valve 10.

A first port 21 of the second directional control valve 20 is connected to a rod-side port 120 of the hydraulic cylinder 100. A second port 22 of the second directional control valve 20 is connected to a load port 12 of the first directional control valve 10. A third port 23 of the second directional control valve 20 is connected to a discharge port of the second hydraulic pump P2.

The position control controller 40 controls the first directional control valve 10 and the second directional control valve 20 on the basis of operation information, a flow rate command signal, and a pressure command signal from a main engine controller (not illustrated), and output of the position sensor 60. The controller 50A controls the first motor M1 on the basis of a flow rate command signal and a pressure command signal from the position control controller 40, and output of the pressure sensor PS1. The controller 50B controls the second motor M2 on the basis of the flow rate command signal and the pressure command signal from the position control controller 40, and output of the pressure sensor PS2.

In the hydraulic device having the above configuration, in a state where the piston 102 of the hydraulic cylinder 100 is located closest to the head-side port 110, the position control controller 40 energizes the solenoid sol1 of the first directional control valve 10 to switch the first directional control valve 10 to the left switching position, the solenoid sol3 of the second directional control valve 20 is not energized, and the second directional control valve 20 is switched to the left switching position. As a result, a rod-side port 120 of the hydraulic cylinder 100 is connected to the tank 70 via the second directional control valve 20.

Then, on the basis of the flow rate command signal and the pressure command signal from the position control controller 40 and output of the pressure sensor PS1, the first controller 50A controls the rotational speed of the first motor M1 to move the piston 102 of the hydraulic cylinder 100 rightward at high speed and then moves the piston 102 at low speed.

During this low-speed movement, the solenoid sol3 of the second directional control valve 20 is energized to switch the second directional control valve 20 to the right switching position. As a result, the rod-side port 120 of the hydraulic cylinder 100 is connected to the discharge port of the second hydraulic pump P2.

Then, on the basis of output of the position sensor 60, the second controller 50B controls the second hydraulic pump P2 while the first controller 50A controls the rotational speed of the first motor M1, and the rod 101 of the hydraulic cylinder 100 is moved to the target position.

At this time, acceleration of the hydraulic cylinder 100 is controlled by controlling the rotational speed of the first motor M1 to control the flow rate of hydraulic oil supplied from the first hydraulic pump P1 to the head-side port 110 of the hydraulic cylinder 100. Further, on the basis of output of the position sensor 60, the second hydraulic pump P2 controls the pressure at the rod-side port 120 of the hydraulic cylinder 100 to control braking of the hydraulic cylinder 100. Here, by rotating the second hydraulic pump P2 in the reverse direction, return oil from the hydraulic cylinder 100 is sucked into the discharge port.

Next, in the case of returning the rod 101 of the hydraulic cylinder 100 to the original position, the position control controller 40 does not energize the solenoid sol1 of the first direction control valve 10 and energizes the solenoid sol2, switches the first directional control valve 10 to the right switching position, and turns off energization of the solenoid sol3 of the second directional control valve 20 to switch the second directional control valve 20 to the left switching position.

Then, on the basis of a flow rate command signal and a pressure command signal from the position control controller 40 and output of the pressure sensor PS1, the first controller 50A controls the rotational speed of the first motor M1 to move the piston 102 of the hydraulic cylinder 100 leftward at high speed and moves the piston 102 at low speed to return the rod 101 to the original position.

In this way, in the above hydraulic device, for example, in a press machine, the hydraulic cylinder 100 moves a mold at high speed and the speed is switched to low speed just before the target position. Thus, it is possible to suppress shock at the time of stopping and to more accurately stop the mold at the target position. In a press machine using the hydraulic device of the second embodiment, a molded product with a dimensional accuracy in order of ± 5 µm can be obtained.

In the hydraulic device according to the above configuration, the controller 50A controls the rotational speed of the first motor M1 on the basis of output of the position sensor 60 that detects the position of the rod 101 of the hydraulic cylinder 100 to control the flow rate of the hydraulic oil supplied from the first hydraulic pump P1 driven by the motor M1 to the inflow-side port of the hydraulic cylinder 100. Thus, acceleration of the hydraulic cylinder 100 is controlled. Further, on the basis of output of the position sensor 60, the second controller 50B and the second hydraulic pump P2 control pressure at the outflow-side port of the hydraulic cylinder 100 to control braking of the hydraulic cylinder 100. In this manner, a two-degree-of-freedom control system can be configured to freely control acceleration on the inflow side and braking on the outflow side of the hydraulic cylinder 100.

The hydraulic device according to the second embodiment has effects similar to the hydraulic device according to the first embodiment.

The second controller 50B controls the rotational speed of the second motor M2 of the pressure control circuit on the basis of output of the position sensor 60 to control pressure at the outflow-side port of the hydraulic cylinder 100. Thus, controllability of the braking control on the outflow-side of the hydraulic cylinder 100 can be improved.

Note that in the second embodiment, a hydraulic unit including a hydraulic pump P1, a motor M1, a pressure sensor PS1, a first controller 50A, and the like, or a hydraulic unit including the hydraulic pump P2, the motor M2, the pressure sensor PS2, the second controller 50B, and the like may be used.

### [Third embodiment]

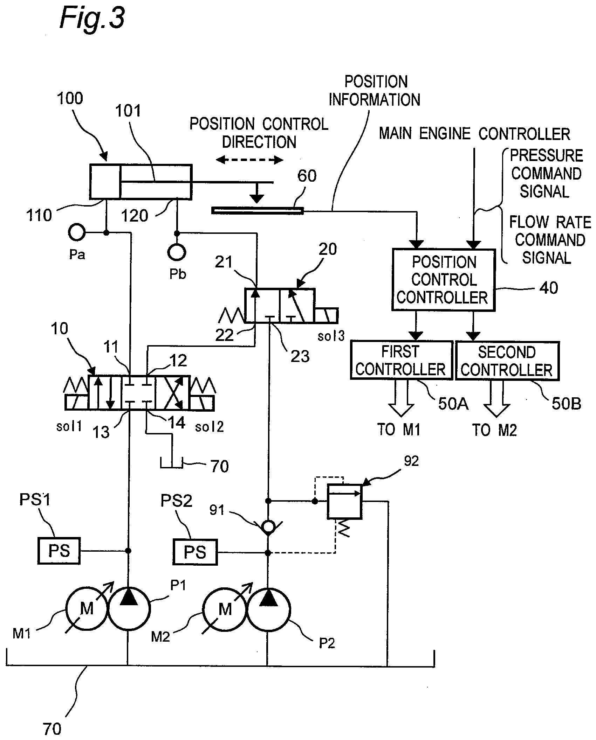

FIG. 3 is a schematic block diagram of a hydraulic device according to a third embodiment which is not covered by the claim. This hydraulic device is used for an industrial machine (main engine) such as an injection molding machine, a press machine, and a machine tool. Note that the hydraulic device according to the third embodiment has the configuration identical to that of the hydraulic device according to the second embodiment except for a check valve 91 and a pressure control valve 92.

As illustrated in FIG. 3 , the check valve 91 disposed between a discharge port of a second hydraulic pump P2 and a rod-side port 120 of a hydraulic cylinder 100 allows only flow of hydraulic oil from the second hydraulic pump P2 to the hydraulic cylinder 100.

The pressure control valve 92 disposed between a flow path connecting the hydraulic cylinder 100 to the check valve 91 and a tank 70 controls the pressure at a rod-side port 120 of the hydraulic cylinder 100 on the basis of pressure of hydraulic oil discharged from a second hydraulic pump P2 controlled by a second controller 50B.

As a result, the capacity of the second hydraulic pump P2 can be made smaller than that in a case where the second hydraulic pump P2 directly controls pressure at the rod-side port 120 of the hydraulic cylinder 100.

Further, according to the above-described hydraulic device, since no return oil flows to the second hydraulic pump P2, it is possible to cope with a regenerative load.

The hydraulic device according to the third embodiment has effects similar to those of the hydraulic device according to the second embodiment.

In each of the first to third embodiments, the hydraulic device for operating the single-rod hydraulic cylinder 100 has been described. However, the present invention may be applied to a hydraulic device for operating a double-rod hydraulic cylinder.

### REFERENCE SIGNS LIST

- 10 First directional control valve
- 20 Second directional control valve
- 30 Electromagnetic proportional pressure control valve
- 40 Position control controller
- 50, 50A, 50B Controller
- 60 Position sensor
- 70 Tank
- 80 External hydraulic source

91 Check valve
92 Pressure control valve
100 Hydraulic cylinder
101 Rod
102 Piston
110 Head-side port
120 Rod-side port
310 Proportional pressure reducing valve
320 Electromagnetic proportional relief valve
M1, M2 Motor
P1, P2 Hydraulic pump
PS1, PS2 Pressure sensor

## Claims

1. A hydraulic device comprising:
a hydraulic pump (P1);
a motor (M1) that drives the hydraulic pump (P1);
a hydraulic cylinder (100) that includes an inflow-side port to which hydraulic oil is supplied from the hydraulic pump (P1) driven by the motor (M1);
a position sensor (60) that detects a position of a rod of the hydraulic cylinder (100);
a controller (50) that controls a flow rate of hydraulic oil supplied from the hydraulic pump (P1) to the inflow-side port of the hydraulic cylinder (100) by controlling the motor (M1) on a basis of output from the position sensor (60); and
a pressure control circuit (30) that controls pressure at an outflow-side port provided in the hydraulic cylinder (100) on a basis of output of the position sensor (60),
**characterized in that**
the pressure control circuit includes a pressure control valve (30) controlled by the controller (50), wherein the pressure control valve (30) is configured to control the pressure of hydraulic oil supplied from an external hydraulic source (80) on the basis of output of the position sensor (60), and controls pressure at the outflow-side port of the hydraulic cylinder (100) by using pressure of hydraulic oil controlled by the pressure control valve (30).

## Patentansprüche

1. Hydraulikvorrichtung, umfassend:
eine Hydraulikpumpe (P1);
einen Motor (M1), der die Hydraulikpumpe (P1) antreibt;
einen Hydraulikzylinder (100), der einen einströmseitigen Anschluss umfasst, zu dem Hydrauliköl von der Hydraulikpumpe (P1) zugeführt wird, die von dem Motor (M1) angetrieben wird;
einen Positionssensor (60), der eine Position einer Stange des Hydraulikzylinders (100) erkennt;
eine Steuerung (50), die eine Durchflussrate von Hydrauliköl steuert, das dem einströmseitigen Anschluss des Hydraulikzylinders (100) von der Hydraulikpumpe (P1) zugeführt wird, indem der Motor (M1) auf der Grundlage der Ausgabe des Positionssensors (60) gesteuert wird; und
eine Drucksteuerschaltung (30), die den Druck an einem ausströmseitigen Anschluss, der in dem Hydraulikzylinder (100) bereitgestellt ist, auf der Grundlage der Ausgabe des Positionssensors (60) steuert,
**dadurch gekennzeichnet, dass**
die Drucksteuerschaltung ein Drucksteuerventil (30) einschließt, das von der Steuerung (50) gesteuert wird, wobei das Drucksteuerventil (30) konfiguriert ist, um den Druck des von einer externen Hydraulikquelle (80) zugeführten Hydrauliköls auf der Grundlage von der Ausgabe des Positionssensors (60) zu steuern, und den Druck an der ausströmseitigen Öffnung des Hydraulikzylinders (100) unter Verwendung des Drucks von Hydrauliköl steuert, der vom Drucksteuerventil (30) gesteuert wird.

## Revendications

1. Dispositif hydraulique comprenant :
une pompe hydraulique (P1) ;
un moteur (M1) qui entraîne la pompe hydraulique (P1) ;
un vérin hydraulique (100) qui inclut un orifice côté écoulement entrant auquel de l'huile hydraulique est distribuée depuis la pompe hydraulique (P1) entraînée par le moteur (M1) ;
un capteur de position (60) qui détecte une position d'une tige du vérin hydraulique (100) ;
un dispositif de commande (50) qui commande un débit de l'huile hydraulique distribuée depuis la pompe hydraulique (P1) à l'orifice côté écoulement entrant du vérin hydraulique (100) en commandant le moteur (M1) sur la base d'une sortie du capteur de position (60) ; et
un circuit de commande de pression (30) qui commande une pression à un orifice côté écoulement sortant prévu dans le vérin hydraulique (100) sur la base d'une sortie du capteur de position (60),
**caractérisé en ce que**
le circuit de commande de pression inclut une soupape de commande de pression (30) commandée par le dispositif de commande (50), dans lequel la soupape de commande de pression (30) est configurée pour commander la pression de l'huile hydraulique distribuée depuis une source hydraulique externe (80) sur la base d'une sortie du capteur de position (60), et commande une pression à l'orifice côté écoulement sortant du vérin hydraulique (100) en utilisant une pression d'huile hydraulique commandée par la soupape de commande de pression (30).
